(19) Europäisches Patentamt
European Patent Office
Office européen des brevets

(11) **EP 1 965 508 B1**

(12) **EUROPEAN PATENT SPECIFICATION**

(45) Date of publication and mention
of the grant of the patent:
**21.04.2010  Bulletin 2010/16**

(51) Int Cl.:
***H04B 7/04*** *(2006.01)*

(21) Application number: **07004388.0**

(22) Date of filing: **02.03.2007**

(54) **Sub channel allocation apparatus for allocating sub channels of a mimo radio channel**

Subkanalzuweisungsgerät für die Zuweisung von Subkanälen eines MIMO-Funkkanals

Appareil d'attribution de sous-canaux pour l'attribution de sous-canaux d'un canal radio mimo

(84) Designated Contracting States:
**DE GB**

(43) Date of publication of application:
**03.09.2008  Bulletin 2008/36**

(73) Proprietor: **NTT DoCoMo, Inc.**
**Chiyoda-Ku**
**Tokyo 100-6150 (JP)**

(72) Inventors:
• **Guthy, Christian**
  **80803 München (DE)**
• **Utschick, Wolfgang**
  **85051 Ingoldstadt (DE)**

• **Nossek, Josef A.**
  **82393 Iffeldorf (DE)**
• **Bauch, Gerhard**
  **80799 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 508 992    EP-A- 1 653 762**
**EP-A- 1 724 948    EP-A1- 1 531 594**
**WO-A-02/093782    US-A1- 2006 268 776**

**Description**

The present invention is in the field of point-to-multipoint communication, as for example, in the downlink of present and future communication systems, where multiple-input-multiple-output transmission is used.

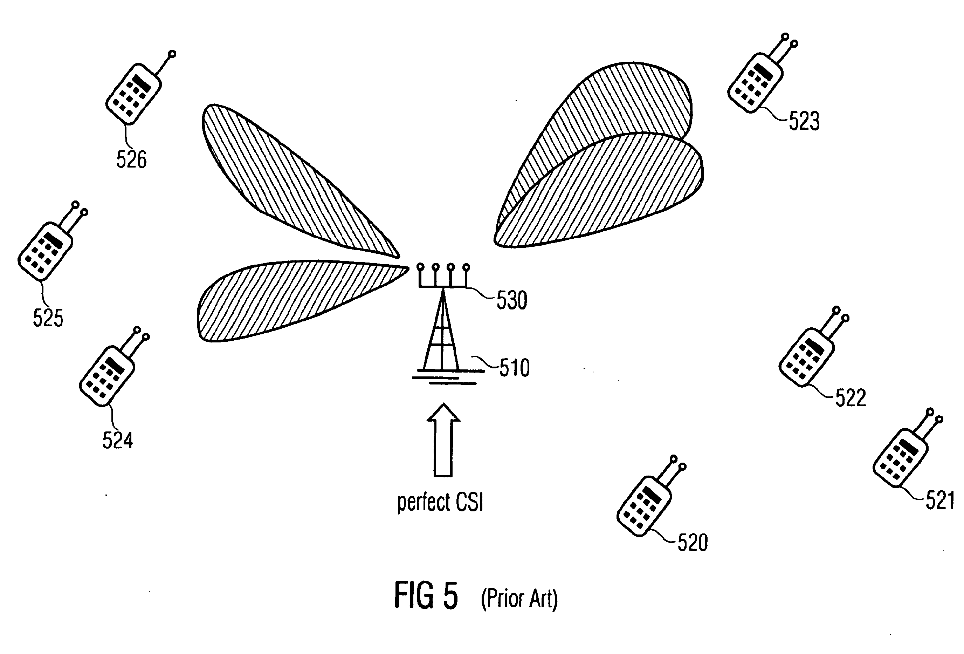

In a point-to-multipoint communication, as for instance, the downlink of a mobile communication system, the transmitter has the important task of assigning resources such as time, frequency and space components to the receivers under its coverage..Fig. 5 depicts a general point-to-multipoint scenario, where a base station 510 serves multiple mobile stations 520 to 526. The base station 510 utilizes multiple antennas 530, as well as some of the mobile stations 520 to 526 utilize more than one receive antenna. In these scenarios, it is a task of the base station or the entire network, to optimize or maximize the sum capacity in the downlink, i.e. when transmitting from the base station 510 to the mobile stations 520 to 526.

Transmission schemes often assume that the base station 510 has perfect channel state information (CSI = Channel State Information), as also indicated in Fig. 5. With this assumption, multiple algorithms or methods are known, optimizing the sum capacity in the downlink. If the transmitter knows the channel of each user, multiple users can be served at the same time over the same frequency multiplexing them in space. For this purpose, multiple antennas at the transmitter and the receivers are employed, which leads to the well-known multiple-input-multiple-output (MIMO = Multiple-Input-Multiple-Output) systems.

One method is the so-called SESAM (SESAM = Successive Encoding Sub channel Allocation Method), which computes the singular values of each user's MIMO channel matrix at a base station. Once the singular values have been determined, the method selects the user with the strongest principal singular value. Corresponding to this strongest principal singular value, the right singular vector resulting from the singular value decomposition is used as a transmit beamformer weighting vector. In order to assign more users to spatial dimensions, all channel, respectively MIMO radio channel, matrices of all users need to be transformed, corresponding to the spatial dimension or right singular vector of the already selected user. Therefore, all radio channels of all users are projected into a nullspace of the selected transmit beamformer and their maximum singular values are computed again based on the projected channels. Again, the user with the strongest principal singular value is selected, and the sequence is repeated until no spatial dimensions are left.

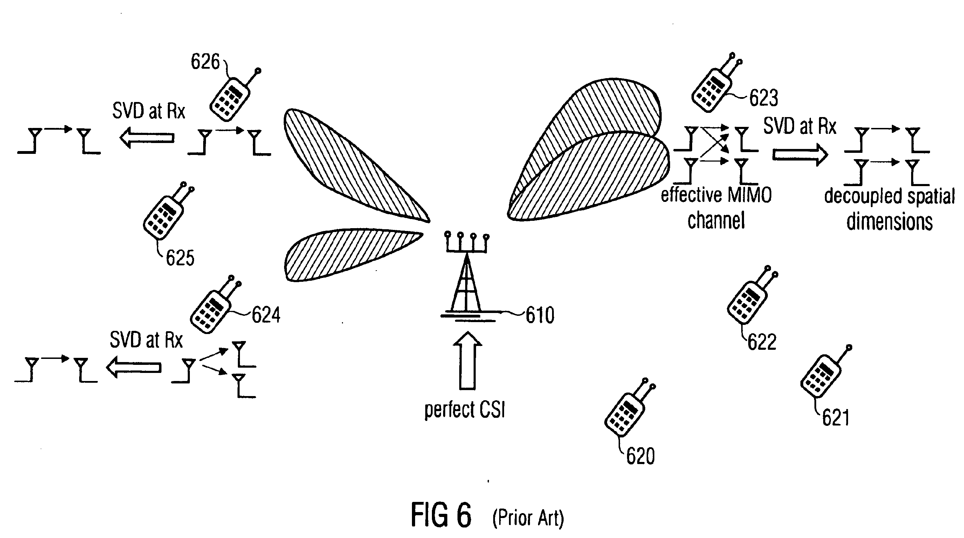

Another example scenario is illustrated in Fig. 6. Fig. 6 shows a base station 610, which is assumed to have perfect CSI knowledge and is therewith enabled to carry out a singular value decomposition. The base station is used to serve multiple mobile stations 620 to 626, of which some utilize two receive antennas. For example, the mobile station 623 utilizes two receive antennas, consequently a two effective SISO (SISO = Single Input Single Output) channels can be established as indicated in Fig. 6, in the sketch next to the mobile station 623. By for example, carrying out a singular value decomposition (SVD = Singular Value Decomposition) at the mobile station or receiver (Rx = receiver), decoupled spatial dimensions can be obtained, according to the sketch in Fig. 6.

If a mobile station, as for example, mobile station 626 in Fig. 6 utilizes only a single receive antenna and thus only a single spatial dimension can be supported. Moreover, a mobile station, as for example, mobile station 624 in Fig. 6, may utilize several receive antennas, however does not support multiple spatial dimensions. In this scenario, the base station 610 can still carry out a singular value decomposition, in order to determine a single spatial dimension to serve the mobile station 624.

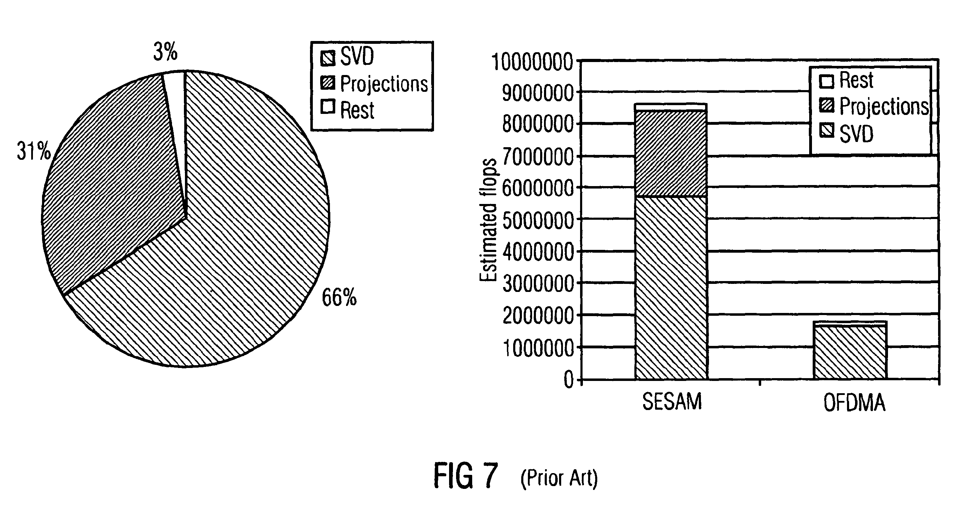

Fig. 7 shows a complexity analysis of the SESAM. On the left hand side there is a circular shaped diagram, which indicates how the relative distribution of the complexity is shared among the SVD, the radio channel matrix projections and all other operations. It can be seen that about 2/3rds of the complexity are evoked by the SVD. On the right hand side of Fig. 7 two bar graphs are depicted, in which one refers to SESAM and one refers to OFDMA (OFDMA = Orthogonal Frequency Division Multiple Access). The OFDMA pile indicates the complexity of a sub carrier assignment scheme in an OFDMA system, where sub carriers are assigned on a basis of their highest capacity in each sub carrier, i.e. a sub carrier is assigned to the user, utilizing the spatial sub channel with the highest capacity on this sub carrier.

In the diagram depicted in Fig. 7 complexity measures are presented in terms of floating point operations (flops = Floating Point Operations), which are estimated for the two algorithms. It can be seen, that SESAM has more than four times the complexity in terms of flops than OFDMA. SESAM, therefore, has the problem, that significant processing power, e.g. in terms of CMOS processors or coprocessors are required at a base station, in order to carry out the respective methods.

When considering, for example, a scenario with K users, the selection of a user to be served requires K singular value decompositions and K projections in each spatial dimension of all users in order to select the first user. It is a disadvantage for SESAM that K-1 singular value decompositions and projections are inefficient since they are not needed for further signal processing and are not exploited for further signal processing.

Considering a MIMO system with $K$ users and with $M_{Tx}$ antennas at the transmitter and $M_{Rx,k}$ antennas at the $k$-th receiver, the $k$-th user's channel can be described by the matrix

$$\mathbf{H}_k \in \mathbf{C}^{M_{Rx,k} \times M_{Tx}},$$

where $\mathbf{C}$ indicates the set of complex numbers. To such a system the Successive Encoding Subchannel Allocation Method (SESAM), cf. P. Tejera, W. Utschick, G. Bauch, and J. A. Nossek, "Subchannel allocation in multi-user multiple-input-multiple-output systems", IEEE Transactions on Information Theory, 2006, accepted for publication, can be applied in order to allocate space and frequency dimensions to the different users. SESAM is designed to maximize sum capacity and it has been shown that the theoretical boundary given by the Sato bound can be closely achieved, cf. Hiroshi Sato, "An Outer Bound to the Capacity Region of Broadcast Channels", IEEE Transactions on Information Theory, 24:374-377, May 1978.

The algorithm works as follows: First the principal singular value of each user $\sigma_{k,i,1}$ is determined, whereby i denotes the dimension index and the index 1 stands for the principal singular value. Currently there is $i$=1. Afterwards the user with the largest singular value

$$\sigma_{\pi(1),1,1} = \max_k \sigma_{k,1,1}$$

is selected for transmission in the first spatial domain. $\pi(i)$ thereby denotes the encoding order function, i.e. $\pi(1)$ refers to the user encoded in dimension 1. The transmit beamforming vector is given by the left singular vector $\upsilon 1$ corresponding to the principal singular value of user $\pi(1)$. To determine the user in the second dimension first all channels are projected into the null space of $\upsilon 1$, such that the following users do not interfere to user $\pi(1)$. The projected channels $\mathbf{H}_{k,2}$ are obtained by the matrix operation

$$\mathbf{H}_{k,2} = \mathbf{H}_k(\mathbf{I} - \upsilon_1 \upsilon_1^H),$$

$$(1.1)$$

whereby $\mathbf{I}$ denotes the $M_{Tx} \times M_{Tx}$ identity matrix and the second index of the channel matrix constitutes the dimension index. Note that this operation only guarantees that user $\pi(2)$ does not interfere with user $\pi(1)$. Interference from user $\pi(1)$ to user $\pi(2)$ is canceled by means of *Dirty Paper Coding* (DPC). User selection is now performed with the projected channels and the user with the maximum projected singular value is chosen for transmission. The corresponding transmit vector $\upsilon 2$ is the principal right singular vector of the projected channel matrix $\mathbf{H}_{\pi(2),2}$.

The process is continued by further projecting the matrices $\mathbf{H}_{k,2}$ into the nullspace of $\upsilon 2$ and selecting the user for the next spatial dimension until no spatial dimension is left. By this procedure up to $M_{TX}$ scalar sub channels are generated. As no interference occurs on a sub channel, the optimum power allocation is determined by water filling over the sub channels. The SESAM algorithm can be easily extended to Orthogonal Frequency Division Multiplexing (OFDM) systems by decomposing the MIMO channels into scalar sub channels on each sub carrier separately as described above and performing water filling over the sub channels of all carriers. Concerning computational complexity SESAM requires $M_{Tx}K$ principal singular values and $M_{Tx}$ singular vectors to be determined, as the number of exploitable spatial dimensions is limited by the number of transmit antennas.

In OFDM systems these numbers have to be multiplied by the number of sub carriers C. When the power method, cf. Gene H. Golub and Charles F. van Loan, "Matrix Computations", The John Hopkins University Press, 1989, is used, the number of *floating point operations* (flops) necessary for this computations is given by:

$$M_{Tx}CK\left[M_{Rx}^2 M_{Tx} + M_{Rx}\left(M_{Tx} - \frac{M_{Rx}}{2}\right) - \frac{M_{Rx}}{2} + I_{PM}\left(2M_{Rx}^2 + 3M_{Rx} - 1\right)\right] + M_{Tx}C\left[2M_{Rx}M_{Tx} - M_{Tx}\right] \quad (1.2)$$

whereby $I_{PM}$ denotes the average number of iterations needed by the power method to converge and $C$=1 if OFDM is not employed. For obtaining (1.2) it is assumed that all receivers have the same number of antennas $M_{Rx}$ and that one floating point operation corresponds to one complex addition or one complex multiplication. Furthermore the projections also need a considerable amount of computational power. Under the same assumptions as above the number of flops necessary for the projections can be computed according to:

$$(M_{Tx} - 1)C\left[K\left(2M_{Rx}M_{Tx}^2 - M_{Rx}M_{Tx}\right) + M_{Tx}^2 + M_{Tx}\right]$$

$$(1.3)$$

The computational complexity of the other operations is much lower than that of those operations and are therefore not listed here.

EP 1 508 992 A2 discloses an apparatus and method for scheduling resources in a multiuser MIMO radio communication system. A concept is described, wherein a transmitter receives channel quality information from receivers, whereupon the transmitter schedules resources in terms of physical layer and MAC layer for the receivers within a corresponding scheduling period based on the received channel quality information. Thereafter, the transmitter precodes signals to be transmitted to the resource-scheduled receivers in a predetermined coding method before transmission, thereby trying to maximize the system transmission efficiency.

WO 02/093782 A1 describes a concept for allocation of uplink resources in a MIMO communication system. In the concept described, a number of sets of terminals are formed for possible data transmission to a base station. Each set includes a unique combination of terminals and corresponds to a hypothesis to be evaluated. The evaluation can be carried out, for example, based on channel response estimates for each terminal. One of the evaluated hypothesis is selected based on the performance. Selected terminals are scheduled for data transmission. A successive cancellation receiver processing scheme may be used to process the signals transmitted by the scheduled terminals. In this case, one or more orderings of the terminals in each set may be formed, with each terminal ordering corresponding to a sub-hypothesis to be evaluated. The performance of each sub-hypothesis is then evaluated and one of the sub-hypothesis is selected.

It is the objective of the present invention to provide a more efficient sub channel allocation apparatus and method with a lower complexity.

The objective is achieved by a sub channel allocation apparatus according to claim 1 and a method for allocating sub channels according to claim 19.

The objective is achieved by a sub channel allocation apparatus for allocating sub channels of a MIMO radio channel to a plurality of users, comprising a radio channel evaluator for evaluating the MIMO radio channels for the plurality of users to determine a selection metric for a user, the selection metric being based on elements of a MIMO radio channel matrix of the user. The sub channel allocation apparatus further comprising a pre-selector for selecting a subgroup of the plurality of users based on the selection metrics, the selected users supporting a higher performance on a spatial sub channel than the non-selected users and the sub channel allocation apparatus further comprises a sub channel allocator, responsive to the pre-selector for allocating a sub channel to a selected user.

Embodiments of the present invention provide the advantage, that the complexity of sub channel allocation methods and apparatuses is reduced significantly when compared to conventional approaches, as through a pre-selection mechanism the group of users, which are considered for sub channel allocation, can be reduced without introducing any performance losses.

When running the SESAM algorithm on each carrier and each spatial dimension, the principal singular values of K channel matrices must be determined, whereby, in addition, each channel matrix must have been projected in advance from the second dimension onwards. Hence, K costly computations of singular values and projections need to be performed to select one user. One measure to reduce the amount of necessary singular value decompositions and projections is, therefore, to perform a user pre-selection, i.e. to consider a reduced number of users for transmission in the current dimension and conduct projection and singular value decomposition only for those users according to embodiments of the present invention.

Embodiments of the present invention provide a user pre-selection criterion or a selection metric for sub channel allocation methods, as for example SESAM. The pre-selection criterion or the selection metric serves to exclude users from the actual user selection in each spatial dimension and, therefore, avoids computation of singular value decompositions and projections of those users. Embodiments of the present invention therefore provide the advantage that the complexity of, for example, a SESAM algorithm, can be reduced. In other embodiments similar algorithms, which are e.g. based on user selection according to a maximum singular value, a maximum capacity or similar metrics are utilized with reduced complexity achieved by embodiments of the present invention. Embodiments of the present invention keep the performance of the allocation algorithms, i.e. they do not introduce any performance losses. Furthermore, embodiments of the present invention introduce only low additional computational expenses for the inventive user pre-selection methods.

It is a further advantage of embodiments of the present invention that, for example, in base stations, as they are utilized in present and future communications systems, valuable resources can be saved. The task of sub channel allocation is carried out e.g. at a base station, in another embodiment, for example, at a radio network or base station controller, which controls a number of base stations, or generally at a network entity. Since embodiments of the present invention reduce the complexity of the channel allocation algorithm, processing resources can be saved, for example, in terms of the number of instructions required for the channel allocation algorithm.

It is a common measure to express the floating point operations or the number of instructions, e.g. in MIPS (MIPS = Mega Instructions Per Second), which can be significantly reduced with embodiments of the present invention. Therefore, a more cost efficient processor or coprocessor can be used to carry out sub channel allocation. In one embodiment, such a processor or coprocessor may be implemented in CMOS technology (CMOS = Complementary Metal Oxide Semiconductor).

Consequently, as with embodiments of the present invention, the number of instructions necessary to allocate a sub channel to a user is reduced, energy or power savings can be obtained by the corresponding embodiments. In yet another embodiment, the advantage of lower complexity or lower number of instructions can be utilized in order to allocate sub channels faster, i.e. to save processing time at the sub channel allocator.

Preferred embodiments of the present invention will be further detailed utilizing the accompanying figures, in which

Fig. 1 shows an embodiment of a sub channel allocation apparatus;

Fig. 2a shows simulation results for SESAM, an embodiment with SESAM, and OFDMA;

Fig. 2b shows simulation results detailing the complexity shares of several sub steps within a sub channel allocation;

Fig. 3 shows an advantage of individual user rates with an embodiment;

Fig. 4 shows simulation results for a sample scenario;

Fig. 5 shows a MIMO scenario;

Fig. 6 shows another MIMO scenario;

Fig. 7 shows complexity evaluations of concepts.

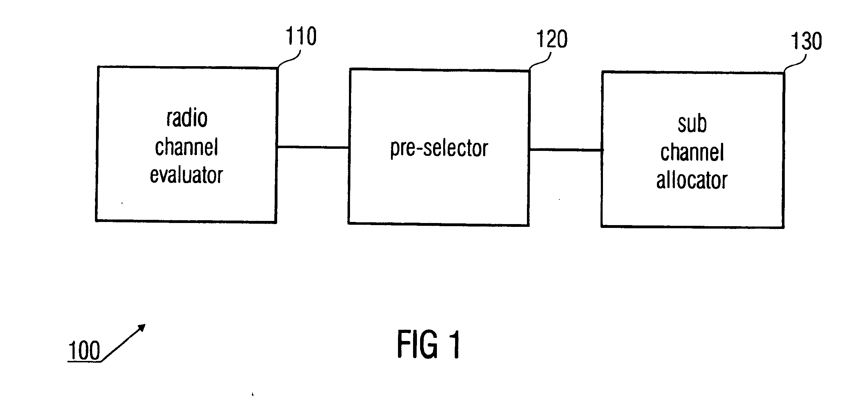

Fig. 1 shows an embodiment of a sub channel allocation apparatus 100 for allocating sub channels of a MIMO radio channel to a plurality of users, which comprises a radio channel evaluator 110 for evaluating the MIMO radio channels of the plurality of users to determine a selection metric for a user, the selection metric being based on elements of a MIMO radio channel matrix of the user. The subchannel allocation apparatus 100 further comprises a pre-selector 120 for selecting a subgroup of the plurality of the users based on the selection metrics, the selected users supporting a higher performance on a spatial subchannel than the non-selected users. The sub channel allocation apparatus 100 further comprises a sub channel allocator 130, responsive to the pre-selector 120 for allocating a sub channel to a selected user. Embodiments may determine the performance of a user on a spatial sub channel by one of or a combination of a group of a highest capacity, an SNR (SNR = Signal-to-Noise-Ratio), an SINR (SNR = Signal-to-Noise-and-Interference-Ratio), a data rate, a required transmit power, an outage capacity or a lowest error rate as e.g. a bit-error-rate.

In another embodiment, the radio channel evaluator 110 can be adapted for determining the selection metric based on one of or a combination of a group of a capacity, an SNR (SNR = Signal-to-Noise-Ratio), an SINR (SNR = Signal-to-Noise-and-Interference-Ratio), a data rate, a transmit power, an outage capacity or error rate of a spatial sub channel of a MIMO radio channel of a user. In another embodiment, the radio channel evaluator 110 is adapted for determining the selection metric as a lower or upper bound for a principal singular value of a MIMO channel matrix of a user. The lower bound may be determined by dividing the upper bound by a rank of a MIMO radio channel matrix.

In another embodiment, the radio channel evaluator 110 is adapted for determining a product matrix of a user's MIMO radio channel matrix and its Hermitian transpose, on which the selection metric can be based. The radio channel evaluator 110 can be adapted for determining the trace of the product matrix, on which the selection metric can be based. The radio channel evaluator 110 may be further adapted for determining a Frobenius norm of a MIMO channel matrix of a user, on which the selection metric may be based. Other embodiments can comprise a radio channel evaluator 110, which is adapted for determining a selection metric from a user for a modified MIMO radio channel matrix, the modified MIMO matrix being based on an allocated sub channel to a different user and the MIMO radio channel matrix of the user. The radio channel evaluator 110 can be further adapted for determining the selection metric of the modified MIMO radio channel matrix, based on the allocated sub channel and the MIMO radio channel matrix of the user.

The pre-selector 120 can, in other embodiments, be adapted for selecting users from the plurality of users, whose selection metric indicates a possibility of having one of or a combination of a group of a highest capacity, SNR (SNR = Signal-to-Noise-Ratio), SINR (SNR = Signal-to-Noise-and-Interference-Ratio), data rate or lowest error rate on the MIMO radio channel within the plurality of users. The selection metric may comprise a lower and an upper bound for a capacity a user could achieve on a sub channel of a MIMO radio channel and the pre-selector 120 may be further adapted for selecting users, whose lower bound is higher than other user's upper bounds. In another embodiment, the pre-selector 120 may be adapted for determining a highest lower bound within the plurality of users and for selecting users whose upper bound is higher than the highest lower bound.

In an alternative embodiment, the selection metric can comprise a lower or upper bound for a principal singular value of a MIMO channel matrix of a user and the pre-selector 120 can be adapted for comparing the lower or upper bound to a threshold and for selecting users, whose lower or upper bound is above the threshold. Moreover, the selection metric can comprise a lower and an upper bound of a user and the pre-selector 120 may be adapted for selecting a user, whose lower bound is higher than another user's upper bound. Consequently, the pre-selector 120 may be adapted for determining a highest lower bound within the plurality of users and for selecting users, whose upper bounds are higher than the highest lower bound, in another embodiment.

The sub channel allocator 130 can be adapted for allocating a sub channel with the highest capacity or highest principal singular value to a selected user. In another embodiment, the sub channel allocator 130 can be adapted for adapting the MIMO radio channel of a user to an allocated sub channel, the allocated sub channel being allocated to a different user. The sub channel allocator 130 may be adapted to transform a MIMO radio channel matrix according to a sub channel allocation to a user. In another embodiment, the subchannel allocator 130 can be adapted for providing information on the allocated sub channel to the radio channel evaluator 110. The sub channel allocation apparatus 110, respectively the sub channel allocator 130 can be adapted for allocating sub channels according to SESAM.

According to an embodiment a user k will not be considered in a current dimension i, if its strongest singular value $\sigma_{k,i,1}$ is smaller than the maximum principal singular value of all users, i.e. user k will not be selected for transmission, if

$$\sigma_{k,i,1} < \max_{l=1,\ldots,K}(\sigma_{l,i,1})$$

(1.4)

Clearly (1.4) holds also for the squared singular values $\sigma_{l,i,1}^2$, which are equal to the principal eigenvalues of the matrices $\mathbf{H}_{l,i}\mathbf{H}_{l,i}^H$, whereby $\mathbf{H}_{l,i}$ is the projected channel matrix of user $l$ in dimension i. Using the traces of these matrices its strongest eigenvalues can be bounded as follows:

$$\frac{tr\left(\mathbf{H}_{l,i}\mathbf{H}_{l,i}^H\right)}{n_{l,i}} \leq \sigma_{l,i,1}^2$$

(1.5)

$$\sigma_{l,i,1}^2 \leq tr\left(\mathbf{H}_{l,i}\mathbf{H}_{l,i}^H\right),$$

(1.6)

whereby $n_{i,i} \leq \min(M_{Tx}, M_{Rx,l})$ denotes the rank of the matrix $\mathbf{H}_{l,i}$. The trace of a matrix is equal to the sum of its eigenvalues and the maximum eigenvalue cannot be smaller than the sum of eigenvalues divided by the number of nonzero eigenvalues. That leads to (1.5), whereby equality holds in case all nonzero eigenvalues are equal. On the other hand the trace constitutes an upperbound for the principal eigenvalue, which is reached if $\mathbf{H}_{l,i}\mathbf{H}_{l,i}^H$ is a matrix with rank 1. Furthermore the trace of the matrix $\mathbf{H}_{l,i}\mathbf{H}^H_{l,i}$ is equal to the squared Frobenius norm of the matrix $\mathbf{H}_{l,i}$, i.e.

$$tr\left(\mathbf{H}_{l,j}\mathbf{H}_{l,j}^{H}\right)=\left\|\mathbf{H}_{l,j}\right\|_{F}^{2}$$

and $\sigma_{l,k}^{2}$ is the squared 2-norm of this matrix, cf. Gene H. Golub and Charles F. van Loan, "Matrix Computations", The John Hopkins University Press, 1989, i.e.

$$\sigma_{l,k}^{2}=\left\|\mathbf{H}_{l,i}\right\|_{2}^{2}.$$

With these definitions and by inserting the lower bound (1.5) for $\sigma_{l,i}$ and the upper bound (1.6) for $\sigma_{k,i}$ in (1.4), the following statement is obtained:
If for user **k**

$$\left\|\mathbf{H}_{k,i}\right\|_{F}^{2}<\max_{l=1,\dots K}\left(\frac{\left\|\mathbf{H}_{l,i}\right\|_{F}^{2}}{n_{l}}\right),$$

(1.7)

holds, then this user will not be considered for transmission in the current dimension i. Due to (1.5) and (1.6), (1.4) is fulfilled if (1.7) holds. Therefore (1.7) can be used as a pre-selection criterion. (1.7) suggests that projections must still be computed for each user, i.e. only computations of singular values can be saved. However, the Frobenius norms in (1.7) can be computed without explicit projections of the matrices $\mathbf{H}_{l,i}$ as shown in the following. $\mathbf{H}_{l,i}$ is generated by projecting the channel matrix of the previous dimension $\mathbf{H}_{l,i-1}$ into the null space of the normalized pre-coding vector of the previous iteration $\upsilon_{i-1}$ according to, compare (1.1),

$$\mathbf{H}_{l,i}=\mathbf{H}_{l,i-1}\left(\mathbf{I}-\upsilon_{i-1}\upsilon_{i-1}^{H}\right)$$

Hence $\left\|\mathbf{H}_{l,i}\right\|_{F}^{2}$ can be computed according to:

$$\left\|\mathbf{H}_{l,i}\right\|_{F}^{2}=tr\left(\mathbf{H}_{l,i-1}\left(\mathbf{I}-\upsilon_{i-1}\upsilon_{i-1}^{H}\right)\mathbf{H}_{l,i-1}^{H}\right)=\left\|\mathbf{H}_{l,i-1}\right\|_{F}^{2}-\left\|\mathbf{H}_{l,i-1}\upsilon_{i-1}\right\|_{2}^{2}$$

(1.8)

whereby it has been considered that each projection matrix is idempotent.

Concerning the rank of the matrices $\mathbf{H}_{l,i}$ that is necessary to compute (1.7) it can be assumed that the unprojected channel matrices have full rank and that this rank is not reduced by projections, if user $l$ has not been assigned to a previous dimension. Otherwise $n_{l}$ can be easily computed by subtracting the number of previous dimensions assigned to this user from the full rank min $(M_{Tx}, M_{Rx})$. Note that this constitutes a worst case assumption for the lower bound in (1.5). Consequently all necessary expressions for (1.7) can be computed without explicitly computing the projected channel matrix, which increases the potential savings drastically.

In summary the embodiment reduces the complexity and works as follows: The Frobenius norms of all users' channel matrices on each carrier are computed and checked on each carrier, whether (1.7) holds. Projection and SVD are then only conducted for those users, for which (1.7) does not hold. In the next spatial dimension, the Frobenius norms of all users are updated according to (1.8) and the same pre-selection of users is performed, for which SVD and channel projections are then conducted. Here even the computation of some updates can be avoided, if one detects that

$$\left\| \mathbf{H}_{k,i-1} \right\|_F^2 < \max_{l=1,\ldots,k-1} \left( \frac{\left\| \mathbf{H}_{l,i} \right\|_F^2}{n_l} \right)$$

$$(1.9)$$

as the Frobenius norms can only become smaller through the projections in (1.8). Note that the maximum in (1.9) can only be taken with respect to the already computed norms. Therefore, in an embodiment the Frobenius norms are updated in descending order, i.e. the user with the highest Frobenius norm in the previous dimension is updated first and the user with the lowest Frobenius norm is updated last. Clearly it can happen that in following dimensions an update over two or more dimensions might be necessary, such that some or even all of the savings obtained thereby vanish later on. An embodiment may utilize user selection requiring extra computations not necessary for SESAM at the first glance. In the first spatial dimension Frobenius norms need to be determined, each of which requires

$$2M_{Tx}M_{Rx} - 1 \quad \texttt{flops}$$

assuming that all $\mathbf{H}_{l,i} \in \mathbf{C}^{M_{Rx} \times M_{Tx}}$, where $\mathbf{C}$ is the set of complex numbers. Furthermore each update according to (1.8) requires a matrix vector product and a vector norm computation, which add up to

$$2M_{Tx}M_{Rx} - M_{Rx} + 2M_{Tx} - 1 \quad \texttt{flops.}$$

Taking all necessary computational operations into account, the extra effort of one embodiment for the user pre-selection can be quantified as

$$CK\left(2M_{Tx}M_{Rx} - 1\right) + \left(M_{Tx} - 1\right)CK\left(2M_{Tx}M_{Rx} - M_{Rx} + 2M_{Tx} - 1\right) \quad \texttt{flops.}$$

Furthermore the projections become slightly more complex. (1.3) assumes that in each step the projected channel matrices $\mathbf{H}_{l,i-1}$ are projected into the nullspace of the beamforming vector $\upsilon_{i-1}$, for which the projection matrix can be computed by subtracting the outer vector product $\upsilon_{i-1}\upsilon_{i-1}^H$ from the identity matrix, which requires $M_{Tx}$ subtractions. As with the proposed user selection, the projected channel matrices might not be available, the users' channel matrices $\mathbf{H}_l$ must now be projected into the null space of all previous beamforming vectors, i.e.

$$\mathbf{H}_{l,i} = \mathbf{H}_l \left( \mathbf{I} - \sum_{j=1}^{i-1} \upsilon_j \upsilon_j^H \right)$$

Hence for i>1, $M_{Tx}^2$ instead of $M_{Tx}$ subtractions are necessary for the computation of one projection matrix.

The user pre-selection presented above incurs no performance losses. However, the probability that all users are pre-selected and no computational savings can be achieved is not equal to zero. One possibility to circumvent this problem is to restrict the number of pre-selected users to a predefined value N<K and apply the Frobenius norms of the projected channel matrices $\left\| \mathbf{H}_{l,i} \right\|_F^2$ as pre-selection criterion. That implies that in each dimension only those users with the N strongest Frobenius norms of its (projected) channels are considered for transmission, if (1.7) fails to sort out enough, i.e. *K-N,* users. This pre-selection constitutes a heuristic and might lead to performance losses. On the other hand reduction in computational complexity can be assured.

The computational savings obtainable by embodiments of sub channel allocation apparatuses applying user pre-selection certainly depend on the underlying scenario. In the following the measured indoor channels from Gerhard Bauch, Jorgen Bach Andersen, Christina Guthy, Markus Herdin, Jesper Nielsen, Pedro Tejera, Wolfgang Utschick, and Josef A. Nossek, "Multiuser MIMO Channel Measurements and Performance in a Large Office Environment", accepted at IEEE Wireless Communications & Network conference (WCNC) 2007 are used. A system with $M_{Tx}$=4 transmit antennas arranged in a Uniform Linear Array (ULA = Uniform Linear Array) is first analyzed $K$=10 users with $M_{Rx}$=3 receive antennas and $C$=1024 sub carrier. The receive SNR (SNR = Signal-to-Noise-Ratio) in the strongest channel is equal to 20dB.

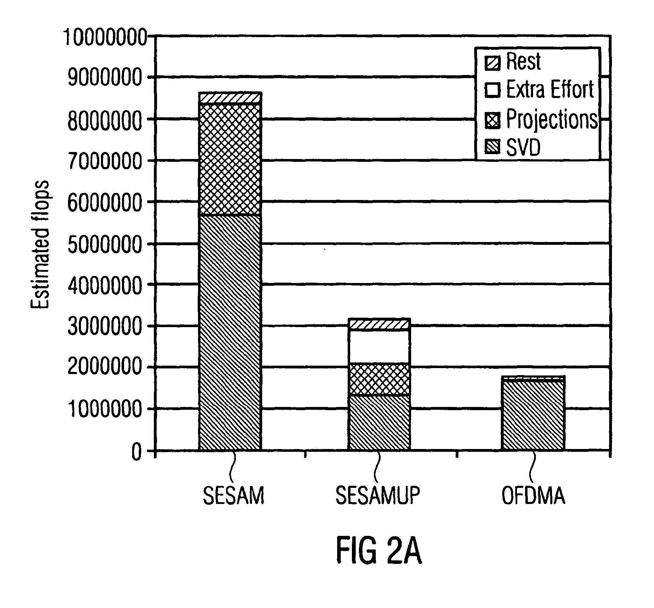

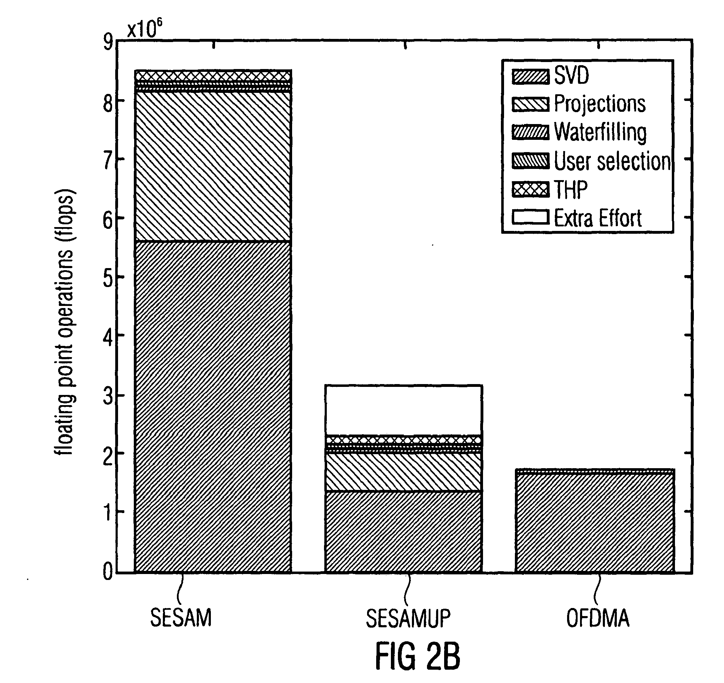

Figs. 2a and 2b show bar graphs illustrating the estimated flops for the above described scenario and showing three bars one for each of SESAM, an embodiment with SESAM labeled SESAMUP, and OFDMA. For comparison, the complexity of OFDMA is included in Figs. 2a and 2b. Thereby each sub carrier is only occupied by one user and this user is selected such that sum capacity is maximized. That requires the computation of all singular values of one user and therefore (1.7) cannot be applied for OFDMA. The pillar in the middle of Figs. 2a and 2b shows the computational complexity of an embodiment with SESAM in this scenario, i.e. when the described user pre-selection is applied.

The bar graphs in Fig. 2a are further partitioned in the complexity shares of SVD, projections, extra effort for the embodiment and the rest. Fig. 2a clearly shows that significant savings in terms of flops can be obtained from embodiments of the present invention. For the sake of completeness the complexity of water filling, actual user selection and Tomlinson Harashima Precoding (THP), which is a practical implementation for DPC, are also included and shown in Fig. 2b. Compared to the original complexity without this selection 62.6% can be saved despite the extra effort necessary for computation of the Frobenius norms.

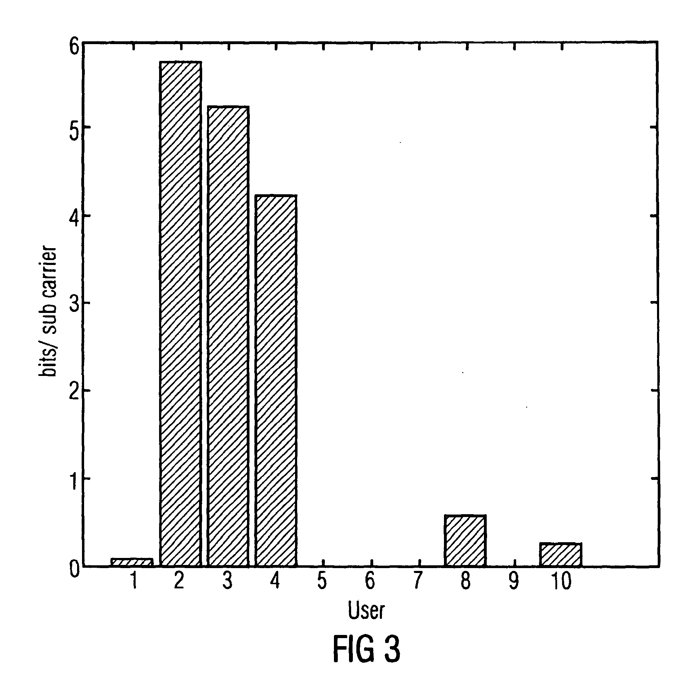

Furthermore if one could tell in advance, which users will not be served by the sum capacity maximizing SESAM algorithm, savings would only be 40% in this scenario. Fig. 3 depicts a set of user individual data rates in terms of bits/sub carrier for considered users in the described scenario. As Fig. 3 indicates, 6 out of 10 users are served with SESAM and users' individual rates after running SESAM both with and without user preselection, are exhibited.

Finally a scenario is considered, where the proposed user preselection seems to fail. Therefore a setting, where the Frobenius norms of all users' channel matrices are equal is constructed. Hence in the first spatial domain no user will be found, which can be excluded before the SVD. For each of the $K$=10 users a channel matrix is generated with circularly symmetric Gaussian, independent and identically distributed entries with variance 1. Afterwards each channel matrix is normalized such that its Frobenius norm is equal to 1. As above the access point is equipped with 4 transmit antennas and 3 antennas can be found at each user. For simplicity, a single carrier system is considered. The transmit SNR is 20dB.

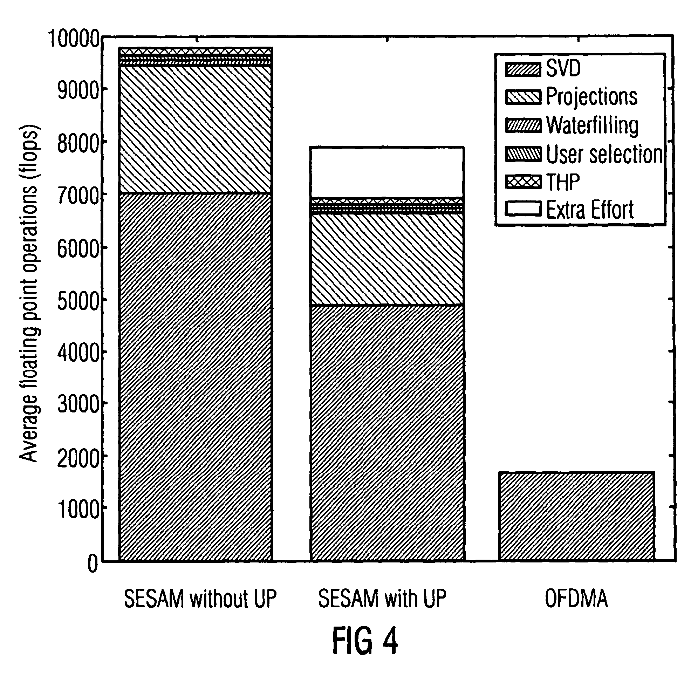

Fig. 4 shows the computational complexity averaged over 10000 channel realizations, again in exposition of a bar graph with the 3 concepts SESAM, SESAMUP and OFDMA, also including the above detailed partitions. Even here a reduction in average complexity of 19.0% can be observed. Furthermore, for none of the 10000 channel realizations complexity of SESAM average floating point operations with user preselection according to an embodiment has been higher than without user preselection. Although no savings of computational complexity are possible in the first spatial domain, the channel projections evoke a diversity in the Frobenius norms such that the embodiment with the user preselection criterion can be applied from the second dimension onwards and overall complexity is still reduced.

Summarizing, embodiments of the present invention enable significant complexity reductions in spatial sub channel assignment. Embodiments simplify the challenging task of evaluating the spatial dimensions or sub channels of a group of users served by a base station through pre-selection of users, without jeopardizing the performance of a communication system in terms of channel capacity. The complexity reduction can for example be translated into faster sub channel assignment or time savings, lower energy consumption, i.e. more efficient use of energy resources in a communication network, or, respectively, in less complex hardware or software implementations at a base station or network entity, which is in charge of sub channel assignment.

Depending on certain implementation requirements of the inventive methods, the inventive methods can be implemented in hardware or in software. The implementation can be performed using a digital storage medium, in particular, a disc, DVD or a CD, having electronically readable control signals stored thereon, which cooperate with a programmable computer system, such that the inventive methods are performed. Generally, the present invention is, therefore, a computer program product with a program code stored on a machine readable carrier, the program code being operated for performing the inventive methods when the computer program product runs on a computer. In other words, the inventive methods are, therefore, a computer program, having a program code for performing at least one of the inventive methods, when the computer program runs on a computer.

List of Reference Signs

| | |
|---|---|
| 100 | Sub channel allocation apparatus |
| 110 | Radio channel evaluator |
| 120 | Pre-selector |
| 130 | Sub channel allocator |

| | |
|---|---|
| 510 | Base station |
| 520-526 | Mobile stations |
| 530 | Multiple antennas |

| | |
|---|---|
| 610 | Base station |
| 620-626 | Mobile stations |

**Claims**

1. Sub channel allocation apparatus (100) for allocating spatial sub channels of a MIMO radio channel to a plurality of users, comprising
a radio channel evaluator (110) for evaluating the MIMO radio channels for the plurality of users to determine a selection metric for a user, the selection metric being based on elements of a modified MIMO radio channel matrix of the user, wherein the radio channel evaluator (110) is adapted for determining the modified MIMO radio channel matrix based on an allocated spatial sub channel to a different user and the MIMO radio channel matrix of the user;
a pre-selector (120) for selecting a subgroup of the plurality of users based on the selection metric, the subgroup of the plurality of users supporting a higher performance on a spatial sub channel than the non-selected users; and
a spatial sub channel allocator (130) responsive to the pre-selector (120) for allocating an other spatial sub channel to a selected user.

2. Sub channel allocation apparatus (100) of claim 1, wherein the radio channel evaluator (110) is adapted for determining the selection metric based on one of or a combination of a group of a capacity, an SNR (SNR = Signal-to-Noise-Ratio), an SINR (SNR = Signal-to-Noise-and-Interference-Ratio), a data rate, a transmit power, an outage capacity or an error rate of a spatial sub channel of a MIMO radio channel of a user.

3. Sub channel allocation apparatus (100) of one of the preceding claims, wherein the radio channel evaluator (110) is adapted for determining the selection metric as a lower or an upper bound for a principal singular value of the modified MIMO radio channel matrix of a user.

4. Sub channel allocation apparatus (100) of claim 3, wherein the lower bound is determined by dividing the upper bound by a rank of the modified MIMO radio channel matrix.

5. Sub channel allocation apparatus (100) of one of the preceding claims, wherein the radio channel evaluator (110) is adapted for determining a product matrix of the user's modified MIMO radio channel matrix and its Hermitian transpose, on which the selection metric is based.

6. Sub channel allocation apparatus (100) of claim 5, wherein the radio channel evaluator (110) is adapted for determining the trace of the product matrix, on which the selection metric is based.

7. Sub channel allocation apparatus (100) of one of the preceding claims, wherein the radio channel evaluator (110) is adapted for determining a Frobenius norm of the modified MIMO radio channel matrix of a user, on which the selection metric is based.

8. Sub channel allocation apparatus (100) of one of the preceding claims, wherein the pre-selector (120) is adapted for selecting users from the plurality of users, whose selection metric indicates a possibility of having one of or a combination of a group of a highest capacity, SNR (SNR = Signal-to-Noise-Ratio), SINR (SNR = Signal-to-Noise-and-Interference-Ratio), data rate, lowest required transmit power, lowest outage capacity or lowest error rate on the MIMO radio channel within the plurality of users.

9. Sub channel allocation apparatus (100) of one of the preceding claims, wherein the selection metric comprises a lower and an upper bound for a capacity a user could achieve on a spatial sub channel of a MIMO radio channel and wherein the pre-selector (120) is adapted for selecting users, whose lower bound is higher than other user's upper bounds.

10. Sub channel allocation apparatus (100) of one of the preceding claims, wherein the pre-selector (120) is adapted for determining a highest lower bound within the plurality of users and for selecting users, whose upper bound is higher than the highest lower bound.

11. Sub channel allocation apparatus (100) of one of the preceding claims, wherein the selection metric comprises a lower or upper bound of a principal singular value of the modified MIMO radio channel matrix of a user and wherein the pre-selector (120) is adapted for comparing the lower or upper bound to a threshold and for selecting users, whose lower or upper bound is above the threshold.

12. Sub channel allocation apparatus (100) of one of the preceding claims, wherein the selection metric comprises a lower and an upper bound for a principal singular value of a MIMO channel matrix of a user and wherein the pre-selector (120) is adapted for selecting users, whose lower bounds are higher than other user's upper bounds.

13. Sub channel allocation apparatus (100) of claim 12, wherein the pre-selector (120) is adapted for determining a highest lower bound within a plurality of users and for selecting users, whose upper bound is higher than the highest lower bound.

14. Sub channel allocation apparatus (100) of one of the preceding claims, wherein the spatial sub channel allocator (130) is adapted for allocating the spatial sub channel with a highest performance, or highest principal singular value, to a selected user.

15. Sub channel allocation apparatus (100) of one of the preceding claims, wherein the spatial sub channel allocator (130) is adapted for adapting the MIMO radio channel of a user to an allocated spatial sub channel, the allocated spatial sub channel being allocated to a different user.

16. Sub channel allocation apparatus (100) of one of the preceding claims, wherein the radio channel evaluator (110) or the sub channel allocator (130) is adapted for transforming a MIMO radio channel matrix according to a spatial sub channel allocated to a user.

17. Sub channel allocation apparatus (100) of one of the preceding claims, wherein the spatial sub channel allocator (130) is adapted for providing information on the allocated spatial sub channel to the radio channel evaluator (110).

18. Sub channel allocation apparatus (100) of one of the preceding claims, wherein the spatial sub channel allocator (130) is adapted for allocating spatial sub channels according to SESAM.

19. Method for allocating spatial sub channels of a MIMO radio channel to a plurality of users, comprising the steps of determining a modified MIMO radio channel matrix for a user based on an allocated spatial sub channel to a different user and the MIMO radio channel matrix of the user;
evaluating the MIMO radio channels for the plurality of users to determine a selection metric for the user, the selection metric being based on elements of the modified MIMO radio channel matrix of the user;
pre-selecting a subgroup of users from the plurality of users based on the selection metric, the subgroup of the plurality of users supporting a higher performance on a spatial sub channel than the non-selected users; and
subsequently allocating an other spatial sub channel to a selected user in response to the step of pre-selecting.

20. Computer program having a program code for performing the method of claim 19, when the computer program code runs on a computer.

**Patentansprüche**

1. Teilkanalzuteilungsvorrichtung (100) zum Zuteilen räumlicher Teilkanäle eines MIMO-Funkkanals an eine Mehrzahl von Benutzern, mit
einem Funkkanalauswerter (110) zum Auswerten der MIMO-Funkkanäle für die Mehrzahl von Benutzern, um eine Auswahlmetrik für einen Benutzer zu bestimmen, wobei die Auswahlmetrik auf Elementen einer modifizierten MIMO-Funkkanalmatrix des Benutzers beruht, wobei der Funkkanalauswerter (110) angepasst ist zum Bestimmen der modifizierten MIMO-Funkkanalmatrix basierend auf einem zugeteilten räumlichen Teilkanal für einen unterschiedlichen Benutzer und der MIMO-Funkkanalmatrix des Benutzers;

einem Vorauswähler (120) zum Auswählen einer Untergruppe der Mehrzahl von Benutzern basierend auf der Auswahlmetrik, wobei die Untergruppe der Mehrzahl von Benutzern eine höhere Leistungsfähigkeit an einem räumlichen Teilkanal als die nicht ausgewählten Benutzer unterstützt; und

einem Räumlich-Teilkanal-Zuteiler (130) zum Zuteilen eines anderen räumlichen Teilkanals einem ausgewählten Benutzer ansprechend auf den Vorauswähler (120).

2. Teilkanalzuteilungsvorrichtung (100) gemäß Anspruch 1, bei der der Funkkanalauswerter (110) angepasst ist zum Bestimmen der Auswahlmetrik basierend auf einem von oder einer Kombination von einer Gruppe einer Kapazität, einem SNR (SNR = Signal-to-Noise-Ratio; Signal-zu-Rausch-Verhältnis), einem SINR (SINR = Signal-to-Noise-and-Interference-Ratio; Signal-zu-Rausch-und-Interferenz-Verhältnis), einer Datenrate, einer Sendeleistung, einer Ausfallkapazität oder einer Fehlerrate eines räumlichen Teilkanals eines MIMO-Funkkanals eines Benutzers.

3. Teilkanalzuteilungsvorrichtung (100) gemäß einem der vorhergehenden Ansprüche, bei der der Funkkanalauswerter (110) angepasst ist zum Bestimmen der Auswahlmetrik als eine untere oder eine obere Grenze für einen singulären Hauptwert der modifizierten MIMO-Funkkanalmatrix eines Benutzers.

4. Teilkanalzuteilungsvorrichtung (100) gemäß Anspruch 3, bei der die untere Grenze durch ein Dividieren der oberen Grenze durch einen Rang der modifizierten MIMO-Funkkanalmatrix bestimmt ist.

5. Teilkanalzuteilungsvorrichtung (100) gemäß einem der vorhergehenden Ansprüche, bei der der Funkkanalauswerter (110) angepasst ist zum Bestimmen einer Produktmatrix der modifizierten MIMO-Funkkanalmatrix des Benutzers und der hermitischen Transposition derselben, auf der die Auswahlmatrix beruht.

6. Teilkanalzuteilungsvorrichtung (100) gemäß Anspruch 5, bei der der Funkkanalauswerter (100) angepasst ist zum Bestimmen der Spur der Produktmatrix, auf der die Auswahlmetrik beruht.

7. Teilkanalzuteilungsvorrichtung (100) gemäß einem der vorhergehenden Ansprüche, bei der der Funkkanalauswerter (110) angepasst ist zum Bestimmen einer Frobenius-Norm der modifizierten MIMO-Funkkanalmatrix eines Benutzers, auf der die Auswahlmetrik beruht.

8. Teilkanalzuteilungsvorrichtung (100) gemäß einem der vorhergehenden Ansprüche, bei der der Vorauswähler (120) angepasst ist zum Auswählen von Benutzern aus der Mehrzahl von Benutzern, deren Auswahlmetrik eine Möglichkeit eines Aufweisens von einer oder einer Kombination von einer Gruppe einer höchsten Kapazität, einem SNR (SNR = Signal-to-Noise-Ratio; Signal-zu-Rausch-Verhältnis), einem SINR (SINR = Signal-to-Noise-and-Interference-Ratio; Signal-zu-Rausch-und-Interferenz-Verhältnis), einer Datenrate, einer niedrigsten erforderlichen Sendeleistung, einer niedrigsten Ausfallkapazität oder einer niedrigsten Fehlerrate an dem MIMO-Funkkanal innerhalb der Mehrzahl von Benutzern angibt.

9. Teilkanalzuteilungsvorrichtung (100) gemäß einem der vorhergehenden Ansprüche, bei der die Auswahlmetrik eine untere und eine obere Grenze für eine Kapazität aufweist, die ein Benutzer an einem räumlichen Teilkanal eines MIMO-Funkkanals erreichen könnte, und wobei der Vorauswähler (120) angepasst ist zum Auswählen von Benutzern, deren untere Grenze höher als obere Grenzen eines anderen Benutzers ist.

10. Teilkanalzuteilungsvorrichtung (100) gemäß einem der vorhergehenden Ansprüche, bei der der Vorauswähler (120) angepasst ist zum Bestimmen einer höchsten unteren Grenze innerhalb der Mehrzahl von Benutzern und zum Auswählen von Benutzern, deren obere Grenze höher als die höchste untere Grenze ist.

11. Teilkanalzuteilungsvorrichtung (100) gemäß einem der vorhergehenden Ansprüche, bei der die Auswahlmetrik eine untere oder obere Grenze eines singulären Hauptwertes der modifizierten MIMO-Funkkanalmatrix eines Benutzers aufweist und bei der der Vorauswähler (120) angepasst ist zum Vergleichen der unteren oder oberen Grenze mit einer Schwelle und zum Auswählen von Benutzern, deren untere oder obere Grenze über der Schwelle liegt.

12. Teilkanalzuteilungsvorrichtung (100) gemäß einem der vorhergehenden Ansprüche, bei der die Auswahlmetrik eine untere und eine obere Grenze für einen singulären Hauptwert einer MIMO-Kanalmatrix eines Benutzers aufweist und bei der der Vorauswähler (120) angepasst ist zum Auswählen von Benutzern, deren untere Grenzen höher als obere Grenzen eines anderen Benutzers sind.

**13.** Teilkanalzuteilungsvorrichtung (100) gemäß Anspruch 12, bei der der Vorauswähler (120) angepasst ist zum Bestimmen einer höchsten unteren Grenze innerhalb einer Mehrzahl von Benutzern und zum Auswählen von Benutzern, deren obere Grenze höher als die höchste untere Grenze ist.

**14.** Teilkanalzuteilungsvorrichtung (100) gemäß einem der vorhergehenden Ansprüche, bei der der Räumlich-Teilkanal-Zuteiler (130) angepasst ist zum Zuteilen des räumlichen Teilkanals mit einer höchsten Leistungsfähigkeit, oder einem höchsten singulären Hauptwert, einem ausgewählten Benutzer.

**15.** Teilkanalzuteilungsvorrichtung (100) gemäß einem der vorhergehenden Ansprüche, bei der der Räumlich-Teilkanal-Zuteiler (130) angepasst ist zum Anpassen des MIMO-Funkkanals eines Benutzers an einen zugeteilten räumlichen Teilkanal, wobei der zugeteilte räumliche Teilkanal einem unterschiedlichen Benutzer zugeteilt ist.

**16.** Teilkanalzuteilungsvorrichtung (100) gemäß einem der vorhergehenden Ansprüche, bei der der Funkkanalauswerter (110) oder der Teilkanalzuteiler (130) angepasst ist zum Transformieren einer MIMO-Funkkanalmatrix gemäß einem räumlichen Teilkanal, der einem Benutzer zugeteilt ist.

**17.** Teilkanalzuteilungsvorrichtung (100) gemäß einem der vorhergehenden Ansprüche, bei der der Räumlich-Teilkanal-Zuteiler (130) angepasst ist zum Liefern von Informationen über den zugeteilten räumlichen Teilkanal an den Funkkanalauswerter (110).

**18.** Teilkanalzuteilungsvorrichtung (100) gemäß einem der vorhergehenden Ansprüche, bei der der Räumlich-Teilkanal-Zuteilter (130) angepasst ist zum Zuteilen räumlicher Teilkanäle gemäß SESAM.

**19.** Verfahren zum Zuteilen räumlicher Teilkanäle eines MIMO-Funkkanals an eine Mehrzahl von Benutzern, mit folgenden Schritten
Bestimmen einer modifizierten MIMO-Funkkanalmatrix für einen Benutzer basierend auf einem zugeteilten räumlichen Teilkanal für einen unterschiedlichen Benutzer und der MIMO-Funkkanalmatrix des Benutzers;
Auswerten der MIMO-Funkkanäle für die Mehrzahl von Benutzern, um eine Auswahlmetrik für den Benutzer zu bestimmen, wobei die Auswahlmetrik auf Elementen der modifizierten MIMO-Funkkanlamatrix des Benutzers beruht;
Vorauswählen einer Untergruppe von Benutzern aus der Mehrzahl von Benutzern basierend auf der Auswahlmetrik, wobei die Untergruppe der Mehrzahl von Benutzern eine höhere Leistungsfähigkeit an einem räumlichen Teilkanal als die nicht ausgewählten Benutzer unterstützt; und
nachfolgendes Zuteilen eines anderen räumlichen Teilkanals einem ausgewählten Benutzer ansprechend auf den Schritt des Vorauswählens.

**20.** Computerprogramm mit einem Programmcode zum Durchführen des Verfahrens gemäß Anspruch 19, wenn der Computerprogrammcode auf einem Computer abläuft.

**Revendications**

**1.** Appareil d'attribution de sous-canaux (100) pour l'attribution de sous-canaux spatiaux d'un canal radioélectrique MIMO à une pluralité d'utilisateurs, comprenant
un évaluateur de canaux radioélectriques (110) destiné à évaluer les canaux radioélectriques MIMO pour la pluralité d'utilisateurs, pour déterminer une métrique de sélection pour un utilisateur, la métrique de sélection étant basée sur des éléments d'une matrice de canaux radioélectriques MIMO modifiée de l'utilisateur, où l'évaluateur de canaux radioélectriques (110) est adapté pour déterminer la matrice de canaux radioélectriques MIMO modifiée sur base d'un sous-canal spatial attribué à un utilisateur différent et la matrice de canaux radioélectriques MIMO de l'utilisateur;
un présélecteur (120) destiné à sélectionner un sous-groupe de la pluralité d'utilisateurs sur base de la métrique de sélection, le sous-groupe de la pluralité d'utilisateurs supportant une performance sur un sous-canal spatial supérieure à celle des utilisateurs non sélectionnés; et
un attributeur de sous-canaux spatiaux (130) réagissant au présélecteur (120) pour attribuer un autre sous-canal spatial à un utilisateur sélectionné.

**2.** Appareil d'attribution de sous-canaux (100) selon la revendication 1, dans lequel l'évaluateur de canaux radioélectriques (110) est adapté pour déterminer la métrique de sélection sur base de l'un parmi ou d'une combinaison d'un groupe composé d'une capacité, d'un SNR (SNR = Signal-to-Noise-Ratio = Rapport Signal-Bruit), d'un SINR (SINR = Signal-to-Noise-and-Interference-Ratio = Rapport Signal-Bruit et Interférence), d'un débit de données, d'une puissance de transmission, d'une capacité d'indisponibilité ou d'un taux d'erreur d'un sous-canal spatial d'un canal radioélectrique MIMO d'un utilisateur.

3. Appareil d'attribution de sous-canaux (100) selon l'une des revendications précédentes, dans lequel l'évaluateur de canaux radioélectriques (110) est adapté pour déterminer la métrique de sélection comme limite inférieure ou supérieure pour une valeur singulière principale de la matrice de canaux radioélectriques MIMO modifiée d'un utilisateur.

4. Appareil d'attribution de sous-canaux (100) selon la revendication 3, dans lequel la limite inférieure est déterminée en divisant la limite supérieure par un rang de la matrice de canaux radioélectriques MIMO modifiée.

5. Appareil d'attribution de sous-canaux (100) selon l'une des revendications précédentes, dans lequel l'évaluateur de canaux radioélectriques (110) est adapté pour déterminer une matrice de produit de la matrice de canaux radioélectriques MIMO modifiée de l'utilisateur et de sa transposition hermitienne sur laquelle se base la métrique de sélection.

6. Appareil d'attribution de sous-canaux (100) selon la revendication 5, dans lequel l'évaluateur de canaux radioélectriques (110) est adapté pour déterminer le tracé de la matrice de produit sur laquelle se base la métrique de sélection.

7. Appareil d'attribution de sous-canaux (100) selon l'une des revendications précédentes, dans lequel l'évaluateur de canaux radioélectriques (110) est adapté pour déterminer une norme de Frobenius de la matrice de canaux radioélectriques MIMO modifiée d'un utilisateur sur laquelle se base la métrique de sélection.

8. Appareil d'attribution de sous-canaux (100) selon l'une des revendications précédentes, dans lequel le présélecteur (120) est adapté pour sélectionner les utilisateurs parmi la pluralité d'utilisateurs dont la métrique de sélection indique une possibilité d'avoir l'un ou une combinaison d'un groupe composé d'une capacité la plus élevée, d'un SNR (SNR = Signal-to-Noise-Ratio = Rapport Signal-Bruit), d'un SINR (SINR = Signal-to-Noise-and-Interference-Ratio = Rapport Signal-Bruit et Interférence), d'un débit de données, d'une puissance de transmission requise la plus basse, d'une capacité d'indisponibilité la plus basse ou d'un taux d'erreur le plus bas sur le canal radioélectrique MIMO parmi la pluralité d'utilisateurs.

9. Appareil d'attribution de sous-canaux (100) selon l'une des revendications précédentes, dans lequel la métrique de sélection comprend une limite inférieure ou supérieure pour une capacité qu'un utilisateur pourrait atteindre sur un sous-canal spatial d'un canal radioélectrique MIMO et dans lequel le présélecteur (120) est adapté pour sélectionner les utilisateurs dont la limite inférieure est supérieure aux limites supérieures d'autres utilisateurs.

10. Appareil d'attribution de sous-canaux (100) selon l'une des revendications précédentes, dans lequel le présélecteur (120) est adapté pour déterminer une limite inférieure la plus élevée parmi la pluralité d'utilisateurs et pour sélectionner les utilisateurs dont la limite supérieure est supérieure à la limite inférieure la plus élevée.

11. Appareil d'attribution de sous-canaux (100) selon l'une des revendications précédentes, dans lequel la métrique de sélection comprend une limite inférieure ou supérieure pour une valeur singulière principale de la matrice de canaux radioélectriques MIMO modifiée d'un utilisateur et dans lequel le présélecteur (120) est adapté pour comparer la limite inférieure ou supérieure avec un seuil et pour sélectionner les utilisateurs dont la limite inférieure ou supérieure est au-dessus du seuil.

12. Appareil d'attribution de sous-canaux (100) selon l'une des revendications précédentes, dans lequel la métrique de sélection comprend une limite inférieure ou supérieure pour une valeur singulière principale d'une matrice de canaux MIMO d'un utilisateur et dans lequel le présélecteur (120) est adapté pour sélectionner les utilisateurs dont la limite inférieure est supérieure aux limites supérieures d'un autre utilisateur.

13. Appareil d'attribution de sous-canaux (100) selon la revendication 12, dans lequel le présélecteur (120) est adapté pour déterminer une limite inférieure la plus élevée parmi une pluralité d'utilisateurs et pour sélectionner les utilisateurs dont la limite supérieure est supérieure à la limite inférieure la plus élevée.

**14.** Appareil d'attribution de sous-canaux (100) selon l'une des revendications précédentes, dans lequel l'attributeur de sous-canaux spatiaux (130) est adapté pour attribuer le sous-canal spatial à la performance la plus élevée, ou la valeur singulière principale la plus élevée, à un utilisateur sélectionné.

**15.** Appareil d'attribution de sous-canaux (100) selon l'une des revendications précédentes, dans lequel l'attributeur de sous-canaux spatiaux (130) est adapté pour adapter le canal radioélectrique MIMO d'un utilisateur à un sous-canal spatial attribué, le sous-canal spatial attribué étant attribué à un utilisateur différent.

**16.** Appareil d'attribution de sous-canaux (100) selon l'une des revendications précédentes, dans lequel l'évaluateur de canaux radioélectriques (110) ou l'attributeur de sous-canaux spatiaux (130) est adapté pour transformer une matrice de canaux radioélectriques MIMO selon un sous-canal spatial attribué à un utilisateur.

**17.** Appareil d'attribution de sous-canaux (100) selon l'une des revendications précédentes, dans lequel l'attributeur de sous-canaux spatiaux (130) est adapté pour fournir des informations sur le sous-canal spatial attribué à l'évaluateur de canaux radioélectriques (110).

**18.** Appareil d'attribution de sous-canaux (100) selon l'une des revendications précédentes, dans lequel l'attributeur de sous-canaux spatiaux (130) est adapté pour attribuer des sous-canaux spatiaux selon SESAM.

**19.** Procédé pour attribuer les sous-canaux spatiaux d'un canal radioélectrique MIMO à une pluralité d'utilisateurs, comprenant les étapes consistant à

déterminer une matrice de canaux radioélectriques MIMO modifiée pour un utilisateur sur base d'un sous-canal spatial attribué à un utilisateur différent et de la matrice de canaux radioélectriques MIMO de l'utilisateur;

évaluer les canaux radioélectriques MIMO pour la pluralité d'utilisateurs, pour déterminer une métrique de sélection pour l'utilisateur, la métrique de sélection étant basée sur des éléments de la matrice de canaux radioélectriques MIMO modifiée de l'utilisateur;

présélectionner un sous-groupe d'utilisateurs de la pluralité d'utilisateurs sur base de la métrique de sélection, le sous-groupe de la pluralité d'utilisateurs supportant une performance sur un sous-canal spatial supérieure à celle des utilisateurs non sélectionnés; et

ensuite, attribuer un autre sous-canal spatial à un utilisateur sélectionné en réaction à l'étape de présélection.

**20.** Programme d'ordinateur ayant un code de programme pour réaliser le procédé selon la revendication 19 lorsque le programme d'ordinateur est exécuté sur un ordinateur.

FIG 1

FIG 2A

FIG 2B

FIG 3

EP 1 965 508 B1

FIG 4

EP 1 965 508 B1

FIG 5  (Prior Art)

EP 1 965 508 B1

FIG 6 (Prior Art)

EP 1 965 508 B1

FIG 7 (Prior Art)

EP 1 965 508 B1

## REFERENCES CITED IN THE DESCRIPTION

**Patent documents cited in the description**

- EP 1508992 A2

- WO 02093782 A1

**Non-patent literature cited in the description**

- **P. TEJERA ; W. UTSCHICK ; G. BAUCH ; J. A. NOSSEK.** Subchannel allocation in multi-user multiple-input-multiple-output systems. *IEEE Transactions on Information Theory,* 2006
- **HIROSHI SATO.** An Outer Bound to the Capacity Region of Broadcast Channels. *IEEE Transactions on Information Theory,* May 1978, vol. 24, 374-377
- **GENE H. GOLUB ; CHARLES F. VAN LOAN.** Matrix Computations. The John Hopkins University Press, 1989

- **GENE H. GOLUB ; CHARLES F. VAN LOAN.** *Matrix Computations,* 1989
- **GERHARD BAUCH ; JORGEN BACH ANDERSEN ; CHRISTINA GUTHY ; MARKUS HERDIN ; JESPER NIELSEN ; PEDRO TEJERA ; WOLFGANG UTSCHICK ; JOSEF A. NOSSEK.** Multiuser MIMO Channel Measurements and Performance in a Large Office Environment. *IEEE Wireless Communications & Network conference (WCNC,* 2007